(19) Europäisches Patentamt
European Patent Office
Office européen des brevets

(11) **EP 2 991 290 B1**

(12) **EUROPEAN PATENT SPECIFICATION**

(45) Date of publication and mention
of the grant of the patent:
**18.04.2018 Bulletin 2018/16**

(51) Int Cl.:
*H04L 12/801* (2013.01)    *H04L 12/823* (2013.01)
*H04L 12/833* (2013.01)

(21) Application number: **14306328.7**

(22) Date of filing: **29.08.2014**

(54) **Controller, node management unit, system and method for controlling packet flow in a network**

Steuerung, Knotenverwaltungseinheit, System und Verfahren zur Steuerung eines Paketflusses in einem Netzwerk

Contrôleur, unité de gestion de noeud, système et procédé de contrôle de flux de paquets dans un réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2016 Bulletin 2016/09**

(73) Proprietor: **Alcatel Lucent**
**91620 Nozay (FR)**

(72) Inventor: **De Vleeschauwer, Danny**
**2018 Antwerpen (BE)**

(74) Representative: **Nokia Bell Patent Attorneys**
**Copernicuslaan 50**
**2018 Antwerp (BE)**

(56) References cited:
**US-A1- 2009 180 380**

• **MING JIANG ET AL: "TLA: A Traffic Load Adaptive Congestion Control Algorithm for TCP/AQM Networks", INTELLIGENT SYSTEMS DESIGN AND APPLICATIONS, 2006. ISDA '06. SIXT H INTERNATIONAL CONFERENCE ON, IEEE, PI, 1 October 2006 (2006-10-01), pages 552-555, XP031022911, ISBN: 978-0-7695-2528-0**
• **BRISCOE J MANNER AALTO UNIVERSITY B: "Byte and Packet Congestion Notification; rfc7141.txt", BYTE AND PACKET CONGESTION NOTIFICATION; RFC7141.TXT, INTERNET ENGINEERING TASK FORCE, IETF; STANDARD, INTERNET SOCIETY (ISOC) 4, RUE DES FALAISES CH- 1205 GENEVA, SWITZERLAND, 26 February 2014 (2014-02-26), pages 1-41, XP015100577, [retrieved on 2014-02-26]**

## Description

Field of Invention

The field of the invention relates to congestion control in a network and in particular to a controller, a node management unit, a system and methods for controlling packet flow in a network comprising a plurality of nodes.

Background

Traffic on the internet keeps increasing and fluctuates a lot from one time to another. As in these circumstances some bottleneck nodes may get congested, a strategy to fairly partition the transport capacity of congested bottleneck nodes amongst the packet flows is needed. Such a strategy is usually based on two principles. The first principle is that the congested bottleneck router conveys congestion signals to the sources. In most cases these congestion signals take the form of packets being marked or dropped in a congested bottleneck node, which are then relayed to the source node by the destination node of the packet flow. The second principle is that the sources react to these congestion signals, for example by adjusting their sending rate. Most sources are adaptive nowadays. The vast majority of the sources is controlled by the Transport Control Protocol (TCP), which incorporates congestion control algorithms that react to marked and dropped packets. Various implementations of TCP exist: TCP newRENO, TCP CUBIC, TCP VEGAS, etc.. The sources controlled by the (less frequently used) Datagram Congestion Control Protocol (DCCP) react in a similar way. Even most sources controlled by the User Datagram Protocol (UDP) nowadays react to packet loss, either at the application layer, above the UDP layer, or simply because users abandon if the quality they experience is too negatively impacted by the packet loss. In the early days, a bottleneck router would only send a congestion signal when its buffer physically overflowed, which is often referred to as tail-drop. This lead to large average queue occupancies and synchronization between sources. The sources would jointly increase their rate and in that way probe the available transport capacity up to a point where the aggregated rate exceeded the transport capacity. This lead to a buffer overflow to which all sources (with a similar Round Trip Time (RTT)) virtually simultaneously reacted, such that the buffer was drained and the process started anew.

To avoid this synchronization problem various Adaptive Queue Management (AQM) algorithms were proposed, an overview of which is given in *[R. Adams, "Active Queue Management: A Survey", CST13]*. Random Early Drop (RED) introduced the notion of randomly dropping or marking packets. The dropping or marking probability is a function of the average buffer occupancy. Although many variants for how the dropping or marking probability depends on the average buffer occupancy were proposed, RED is the most common.

However RED usually still has a large queue occupancy for the following reasons. First, the required dropping or marking probability depends on the number of (TCP) sources supported by the bottleneck node and their RTTs. If there are many sources supported, the probability needs to be higher than when there are only a few sources supported. In order to allow that the dropping or marking probability takes a large enough range of values, the maximum probability $P_{max}$ should be chosen fairly large. Second, due to the stochastic nature of dropping or marking, the sources react stochastically. Although on average the aggregate of sources produces a rate that is just large enough to be supported by the bottleneck node, by accurately adjusting P, there are periods that temporarily more traffic is produced than the output link drains, and hence, the queue is built up, and periods that temporarily less traffic is produced than the output link drains such that the buffer occupancy reduces. During these fluctuations the dropping or marking probability should not change too much, otherwise RED risks to become unstable. Both facts lead to the conclusion that RED can still end up in the situation that it operates with a large average queue occupancy. Other variants of AQM have been proposed. Adaptive Virtual Queue (AQV) *[S. Kunniyur, R. Srikant, "Analysis and design of an adaptive virtual queue (AVQ) algorithm for active queue management", SIGCOMM01]* tries to maintain the load to a fixed value by emulating a virtual queue running at a lower output rate. Recently, Proportional Integral controller Enhanced (PIE) and Controlled Delay (CoDel) have been proposed but it has been shown that they do not substantially improve with respect to adaptive RED.

It is acknowledged that following documents can be regarded as containing technological background information with regard to the present invention:

- Ming Jiang et al: "TLA: A Traffic Load Adaptive Congestion Control Algorithm for TCP/AQM Networks", Intelligent Systems Design and Applications, 2006. ISDA'06 Sixth International Conference On, IEEE, PI, 1 October 2006;
- Briscoe J Manner Aalto University B: "Byte and Packet Congestion Notification; rfc7141.txt", Byte and Packet Congestion Notification; RFC7141.txt. Internet Engineering Task Force, IETF; Standard, Internet Society (ISOC); and
- US 2009/180380 A1.

Summary

The object of embodiments of the invention is to reduce packet flow congestion within a network comprising a plurality of nodes and in particular to reduce the average queue occupancy in a network comprising a plurality of nodes.

According to a first aspect of the invention there is provided a controller for controlling packet flow in a network comprising a plurality of nodes, wherein each node of the plurality of nodes is provided with a node management unit, which is configured for managing a queue of packets in the node by marking or dropping packets according to a node probability. The controller comprises a receiving unit configured for receiving, at multiple moments in time, from each node of the plurality of nodes, load information, which is representative for a traffic load on the queue of packets (i.e., the number of packets per time unit that the queue needs to process) in each node of the plurality of nodes. The controller further comprises a calculating unit configured for calculating, based on the load information, for each node of the plurality of nodes an additional probability for marking or dropping packets, and a communicating unit configured for communicating the additional probability to each node of the plurality of nodes, such that the node probability can be calculated. On reception of the additional probability for marking or dropping packets, each node can combine it with a proper local probability for marking or dropping packets, which the node itself has determined solely based on local information. Both the local probability and the additional probability are then used to determine the node probability, which is the total node probability for marking or dropping packets.

Embodiments of the invention are based *inter alia* on the insight that a network comprising a plurality of nodes, which are potential bottleneck nodes that can accumulate a large queue occupancy, is governed by a controller. The controller instructs the (potential) bottleneck node(s) to drop or mark packets with an additional probability in order to reduce the queue occupancy within the (potential) bottleneck node(s). The controller itself receives information of the nodes related to their current effective load. Based on this information the controller calculates and communicates the additional dropping or marking probability to each node.

This insight brings a solution for the two remaining problems of the prior art systems as described above, which are the incapability of jointly achieving full utilization and low queuing delay in a node due to stochastic fluctuations, and the assumption that there is only one bottleneck, neglecting the fact that alleviating one bottleneck may create another one elsewhere in the network. By overlooking all (potential bottleneck) nodes within a network, the controller takes into account situations with multiple potential bottlenecks, and by calculating and communicating an additional probability for each node within its grasp, the utilization of the nodes will still be maximized, but now under the restriction that the queue occupancy within the nodes will be upper-bounded.

According to an embodiment the receiving unit is configured for receiving the load information from each node of the plurality of nodes at regular intervals spaced apart by a time $\tau$. If $\square$ is small enough, the controller has a continuous view on the traffic load on the queue of the node and is able to adjust probabilities when the load risks to persistently exceed the amount of traffic the queue can process, even before a substantial queue is built up, in contrast to the prior art algorithms, which can only react when a buffer is already built up.

According to a further developed embodiment the load information comprises, for each node of the plurality of nodes, an amount of bytes that has been received by the node during the time $\tau$, and wherein the calculating unit is configured for calculating an additional probability for each node of the plurality of nodes, based on the amount of bytes. According to another embodiment the load information comprises, for each node of the plurality of nodes, the amount of bytes that has been received by the node during the time $\tau$, divided by the capacity of the node during the time $\tau$.

According to another embodiment the calculating unit is configured for calculating from the amount of bytes, the load of the node during the time $\tau$, for comparing the load with a predetermined target load value, and for calculating based on the comparison, for each node of the plurality of nodes, an additional probability. This allows the controller to have an overview of the loads of the different nodes in the network at intervals $\tau$ and to take into account these loads when calculating the additional marking and dropping probabilities. The additional probabilities will aim to keep the loads below 1 and as close to 1 as possible. This provides in an additional control mechanism as compared to prior art algorithms.

According to an embodiment the calculating unit is configured for estimating from the amount of bytes, a delay encountered by packets in each node of the plurality of nodes, by approximately emulating a queue occupancy of each node of the plurality of nodes. The calculation unit is further configured for comparing the delay with a predetermined target delay value, and for calculating based on the comparison, for each node of said plurality of nodes, an additional probability. This allows the controller to have an overview of the delays occurring at the different nodes in the network at intervals $\tau$ and to take into account these delays when calculating additional probabilities. This embodiment is based upon the fact that queue occupancy, and the delay incurred in a queue, can be emulated by a token bucket, which is fairly easy to implement. This equivalence allows the controller to approximately emulate the queue occupancy in the nodes. It is only an approximation as the controller only has coarse knowledge of the arriving traffic. It does not know how the packet arrivals were distributed over an interval of length $\tau$, but this is enough to follow the major trend.

According to a further aspect of the invention, there is provided a node management unit, configured for managing a queue of packets in a node by marking or dropping packets according to a node probability, the node being part of a network comprising a plurality of nodes. The node management unit comprises a sending unit configured for sending, at multiple moments in time, load information, which is representative for a traffic load on the queue of packets in said node, to a controller. The node management unit further comprises a receiving unit configured for receiving an additional marking or dropping probability from the controller, the additional probability being based on load information from each node of the plurality of nodes, and a calculating unit configured for calculating the node's total probability based on a local node probability and the additional marking or dropping probability. In order to create an overview of the nodes in the network and their loads, these nodes are capable of sending the applicable load information towards a central controller. This functionality aligns for example with the paradigm of a Software Defined Network (SDN) wherein a central entity can control the nodes within that network. According to an embodiment the sending unit is configured for sending said load information to the controller at regular intervals spaced apart by a time $\tau$, wherein $\tau$ is larger than the interval in which the local node probability is updated by the node management unit. This allows for the controller to monitor a major trend of the loads within the nodes, and act upon that major trend to send the needed additional dropping or marking probabilities.

According to a further embodiment of the invention the local node probability is managed by adaptive queue management algorithms. For example, RED, adaptive RED, AVQ, PIE or CoDel are used to calculate and update local node probabilities on a timescale which is faster than the influence that the controller exerts by superposing additional marking or dropping probabilities at times $\tau$.

According to an embodiment the calculating unit in each node of the plurality of nodes is configured for calculating the node probability $P_k$ according to following formula:

$$P_k = 1 - \exp(-(U_k + V_k))$$

wherein;

$P_k$ is the node probability of the $k^{th}$ node;
$U_k = -\log (1 - P_{k,loc})$ with $P_{k,loc}$ the local node probability of the $k^{th}$ node; and
$V_k = -\log(1 - P_{k,add})$ with $P_{k,add}$ the additional probability for the $k^{th}$ node.
Note that these calculations can be represented in matrix form, which will be further explained and elaborated on in a following section.

According to a further aspect of the invention, there is provided a system for managing packet flow in a network comprising a plurality of nodes, comprising the controller according to any one of the claims 1 to 5 and wherein each node of the plurality of nodes comprises a node management unit according to any one of the claims 6 to 9.

According to a further aspect of the invention,

there is provided a method for controlling packet flow in a network comprising a plurality of nodes, wherein each node of the plurality of nodes is configured for managing a queue of packets in said node by marking or dropping packets according to a node probability. The method comprises receiving, at multiple moments in time, from each node of the plurality of nodes load information, which is representative for a traffic load on the queue of packets in each node of the plurality of nodes, and calculating, based on said load information, for each node of the plurality of nodes an additional probability for marking or dropping packets. The method further comprises communicating the additional probability to each node of the plurality of nodes, such that the node probability can be calculated.

According to an embodiment said load information comprises, for each node of said plurality of nodes, an amount of bytes that has been received by said node during a time $\tau$, and calculating an additional probability for each node of said plurality of nodes further comprises calculating from said amount of bytes the load of said node during said time $\tau$, comparing said load with a predetermined target load value, and calculating based on said comparison, for each node of said plurality of nodes, the additional probability.

According to a further embodiment the load information comprises, for each node of said plurality of nodes, an amount of bytes that has been received by said node during a time $\tau$, and calculating an additional probability for each node of said plurality of nodes further comprises estimating from said amount of bytes, a delay encountered by packets in each node of said plurality of nodes, by approximately emulating a queue occupancy of each node of said plurality of nodes, comparing said delay with a predetermined target delay value, and calculating based on said comparison, for each node of said plurality of nodes, the additional probability.

According to a further aspect of the invention there is provided a method for managing a queue of packets in a node by marking or dropping packets according to a node probability, said node being part of a network comprising a plurality of nodes. The method comprises sending, at multiple moments in time, load information, which is representative for a traffic load on the queue of packets in said node, to a controller and for receiving an additional probability from the controller, the additional probability being based on load information from each node of the plurality of nodes. The method further comprises calculating the node probability based on a local node probability and the additional probability.

According to an embodiment sending the load information further comprises sending the load information to the controller at regular intervals spaced apart by a time $\tau$, wherein $\tau$ is larger than the interval in which a local node probability is updated.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically a prior art problem occurring in a situation where there are multiple possible bottleneck nodes in a network;
Figure 2 schematically shows a controller according to an exemplary embodiment of the invention;
Figure 3 schematically shows a node management unit according to an exemplary embodiment of the invention;
Figure 4 schematically shows a system comprising a controller according to embodiments of the invention and a plurality of nodes, each containing a node management unit according to embodiments of the invention;
Fig 5 schematically shows an exemplary embodiment of a controller for controlling packet flow in a network;
Fig 6 is a graph, illustrating the equivalence between the evolution of a queue in a node, and the evolution of a token bucket, emulating the queue;
Fig 7 schematically shows an exemplary embodiment of a controller for controlling packet flow in a network;
Fig 8 is a flowchart illustrating an embodiment of an exemplary method for controlling packet flow in a network; and
Fig 9 is a flowchart illustrating an embodiment of an exemplary method for controlling packet flow in a node.

Description of embodiments

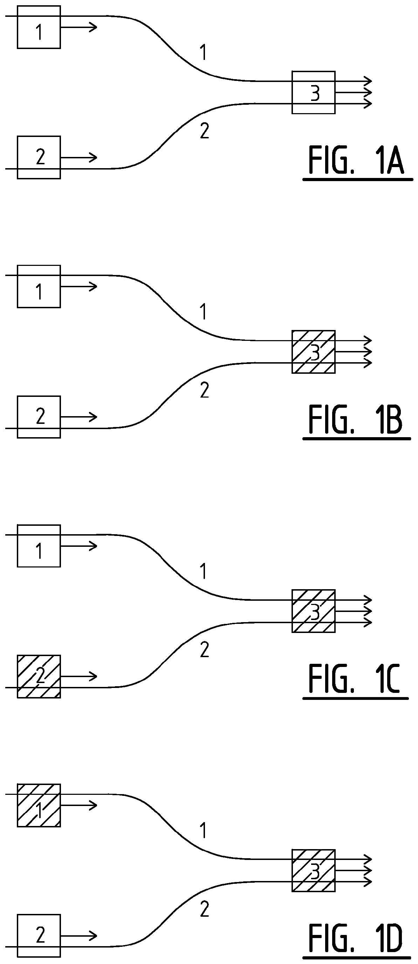

To illustrate the problem in prior art systems which assume that there is only one bottleneck node, figure 1A shows two packet flows $(R_1, R_2)$, represented by the long numbered arrows, consisting of many packets from different sources and towards different destinations, that compete for resources on the network with three potential bottlenecks, represented by the numbered boxes, with corresponding capacities $(C_1, C_2, C_3)$. $(P_1, P_2, P_3)$ are packet marking or dropping probabilities in the nodes. $(Q_1, Q_2)$ are packet marking or dropping probabilities on the packet flows, where $(Q_1, Q_2) \approx (P_1 + P_3, P_2 + P_3)$ if probabilities are small and the packet flows react to drops or marks as: $R_1 = \beta_1 \square (Q_1)^{-\alpha}$ and $R_2 = \beta_2 \square (Q_2)^{-\alpha}$ where $\alpha$ (>0) depends on TCP flavor (e.g., $\alpha = 0.5$ for TCP newRENO) and $\beta_1$ and $\beta_2$ depend on the number of packets and their mix of Round Trip Times (RTTs) in the packet flow. The case of interest is $C_3 < C_1 + C_2$. Figures 1B-1D show that there are three sub-cases, wherein the shaded boxes indicate bottleneck nodes. A fourth sub-case wherein node 1 and node 2 are bottleneck nodes and node 3 is not, is not handled in this context as this problem is equivalent to node 1 and node 2 being in isolation. In each of the sub-cases it is clear that the rates that the packet flows get, strongly depend on the values of the parameters $\beta_1$ and $\beta_2$, which, as mentioned above, depend on the number of packets and mix of RTTs in the packet flow. Figure 1B shows a situation where only node 3 is congested, and this situation can be described as: $C_3/(\beta_1 + \beta_2) < C_1/\beta_1$ and $C_3/(\beta_1 + \beta_2) < C_2/\beta_2$; with corresponding rates $R_1 = \beta_1 \square (C_3/(\beta_1 + \beta_2))^{-\alpha}$ and $R_2 = \beta_2 \square (C_3/(\beta_1 + \beta_2))^{-\alpha}$.

Figure 1C shows a situation where node 3 and node 2 are congested, and this situation can be described as: $C_3/(\beta_1 + \beta_2) < C_1/\beta_1$ and $C_3/(\beta_1 + \beta_2) > C_2/\beta2$; with corresponding rates $R_1 = C_3 - C_2$ and $R_2 = C_2$. By introducing additional packet loss in node 3, not only the bottleneck in node 3 will be alleviated, but eventually also the bottleneck situation in node 2 will be resolved. This would allow for less additional packet loss to be introduced in node 2.

Finally, figure 1D shows a situation where node 3 and node 1 are congested, and this situation can be described as: $C_3/(\beta_1 + \beta_2) > C_1/\beta_1$ and $C_3/(\beta_1 + \beta_2) < C_2/\beta2$; with corresponding rates $R_1 = C_1$ and $R_2 = C_3 - C_1$. It is clear that this is a form of packet flow unfairness: one packet flow may receive much higher rate than the other and one packet flow may suffer from the delay due to congestion, mainly introduced by the other packet flow. It is preferable for an operator to have the means to tune the rate of the packet flows better. This is achieved by the current invention by introducing a controller which has an overview of all possible bottleneck nodes and manages the needs of these nodes by taking into account the bigger picture, instead of focusing on only one node.

Routing configurations of nodes and the packet flows that are supported by the nodes can be represented mathematically by a (K x L)-matrix A, wherein K is the number of nodes in the configuration and L is the number of flows in the configuration. The entries of the matrix are given by $A_{kl} = 1$ if the $k^{th}$ node supports the $l^{th}$ flow, and

$A_{kl} = 0$ otherwise. For example the configuration of three nodes and two flows possibly passing through them can

$$A = \begin{bmatrix} 1 & 0 \\ 0 & 1 \\ 1 & 1 \end{bmatrix},$$

be represented by the (3 x 2)-matrix meaning that a first flow passes through nodes 1 and 3 (first column of A) and that second flow passes through nodes 2 and 3 (second column of A). The same matrix representation can be used to represent more complex and extensive routing configurations which contain more packet flows and/or nodes.

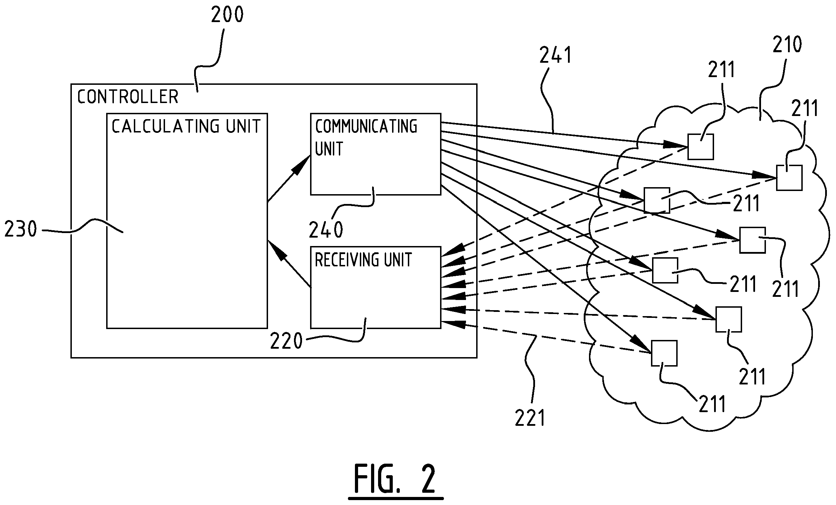

Figure 2 illustrates a controller 200 for controlling packet flow in a network 210 comprising a plurality of nodes 211, wherein each node of the plurality of nodes 211 is provided with a node management unit, which is configured for managing a queue of packets in the node by marking or dropping packets according to a node probability. The controller 200 comprises a receiving unit 220 configured for receiving, at multiple moments in time, from each node 211 of the plurality of nodes, load information 221, which is representative for a traffic load on the queue of packets in each node of the plurality of nodes. The controller 200 further comprises a calculating unit 230 configured for calculating, based on the load information 221, for each node 211 of the plurality of nodes an additional probability 241 for marking or dropping packets, and a communicating unit 240 configured for communicating the additional probability 241 to each node 211 of the plurality of nodes, such that the node probability can be calculated. This way, a network 210 comprising a plurality of nodes 211, which are potential bottleneck nodes that can accumulate a large queue occupancy, is governed by a controller 200. The controller 200 instructs the (potential) bottleneck node(s) 211 to drop or mark packets with an additional probability 241 in order to reduce the queue occupancy within the (potential) bottleneck node(s) 211. The controller 200 itself receives information 221 of the nodes related to their current effective load. Based on this information 221 the controller 200 calculates and communicates the additional dropping or marking probability 241 to each node 211.

According to an embodiment the receiving unit 220 is configured for receiving the load information from each node 211 of the plurality of nodes at regular intervals spaced apart by a time $\tau$. This way the controller 200 has a continuous view on the traffic load on the queue of the node and is able to adjust probabilities when the load risks to persistently exceed the amount of traffic the queue can process, even before a substantial queue is built up, in contrast to prior art algorithms which can only react when a buffer is already built up.

According to a further developed embodiment the load information comprises, for each node 211 of the plurality of nodes, an amount of bytes that has been received by the node 211 during the time $\tau$, and wherein the calculating unit 230 is configured for calculating an additional probability for each node 211 of the plurality of nodes, based on the amount of bytes. From the amount of bytes that the node 211 received, the controller 200 is able to calculate several parameters which can be monitored in order to avoid queues to be built up in the nodes 211. Instead of only the amount of bytes received during a time $\tau$, it is possible in another embodiment that a node sends the amount of bytes that has been received by the node during the time $\tau$, divided by the capacity of the node during the time $\tau$, and thus being directly representative for the load of the node 211 during the time $\tau$.

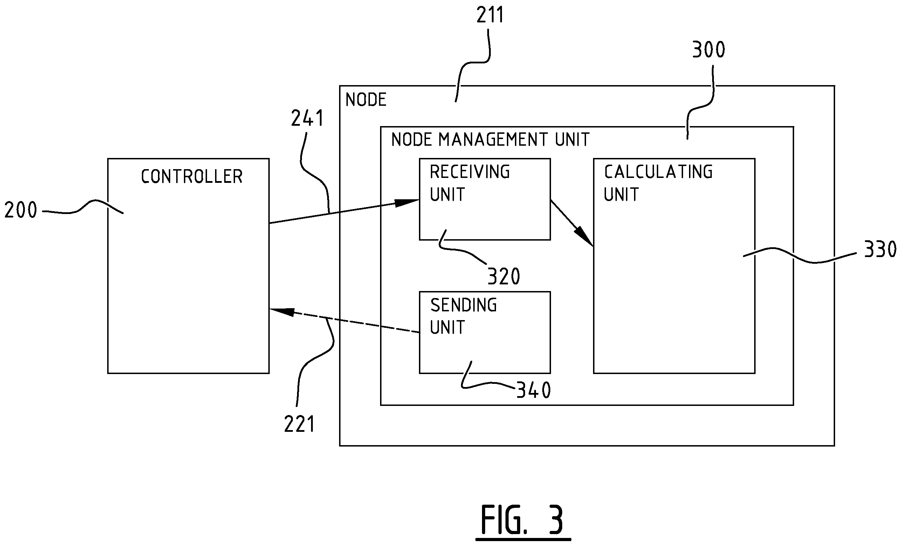

Figure 3 illustrates a node management unit 300, configured for managing a queue of packets in a node 211 by marking or dropping packets according to a node probability, the node 211 being part of a network 210 comprising a plurality of nodes. The node management unit 300 comprises a sending unit 340 configured for sending, at multiple moments in time, load information 221, which is representative for a traffic load on the queue of packets in said node, to a controller 200. The node management unit 300 further comprises a receiving unit 320 configured for receiving an additional probability 241 from the controller, the additional probability being based on load information from each node 211 of the plurality of nodes, and a calculating unit 330 configured for calculating the node probability based on a local node probability and the additional probability. The node probability $P_k$ of the $k^{th}$ node can be written as $P_k = 1 - (1 - P_{k,\,loc})(1 - P_{k,\,add})$, with $P_{k,loc}$ the local node probability of the $k^{th}$ node, which is calculated by the node on a relatively fast time scale, based on local information, and with $P_{k,add}$ the additional probability for the $k^{th}$ node, which is calculated by the controller on a relatively slow timescale, based on information from each of the K nodes in the network.

According to an embodiment the sending unit 340 is configured for sending said load information to the controller 200 at regular intervals spaced apart by a time $\tau$, wherein $\tau$ is larger than the interval in which the local node probability is updated by the node management unit. In an embodiment of the invention the local node probability is managed by adaptive queue management. As stated above, the nodes only communicate with the controller every $\tau$[sec]. Hence this controller 200 works at a slower time scale than the local AQM's that manage the local probability. At the end of an interval of length $\tau$, the node sends the amount of information (in [byte]) it received, optionally divided by what it could process in that interval, i.e. ($C\square\tau$), where C is the node's capacity. The controller calculates the required additional packet marking or dropping probability and sends this to the nodes. The controller sends this additional marking or dropping probability $P_{k,add}$ for the $k^{th}$ node, under the form of a variable $V_k = - \log(1 - P_{k,add})$, which can be considered to be the $k^{th}$ entry of a (K x 1)-matrix V, wherein $V_k \geq 0$. Likewise, the local marking or dropping probability $P_{k,loc}$ can be used to define a variable $U_k = - \log(1 - P_{k,loc})$, which can be considered to be the $k^{th}$ entry of a (K x 1)-matrix U.

According to an embodiment the calculating unit is configured for calculating the node probability $P_k$ according to following formula:

$$P_k = 1 - \exp(-(U_k + V_k))$$

wherein;

$P_k$ is the node probability of the $k^{th}$ node;
$U_k$ = -log(1 - $P_{k,loc}$) with $P_{k,loc}$ the local node probability of the $k^{th}$ node; and
$V_k$ = -log(1 $P_{k,add}$) with $P_{k,add}$ the additional probability for the $k^{th}$ node.
It is noted that U is not known by the controller 200 since U changes faster than the timescale $\tau$ can capture.

It is clear that the new probability $P_k$ never exceeds 1, is equal to the original one if $V_k$=0 and approximates $U_k + V_k$ if both $U_k$ and $V_k$ are small. The imposed packet marks and drop affect the flows that pass through the nodes and these adapt according to their congestion control mechanism.

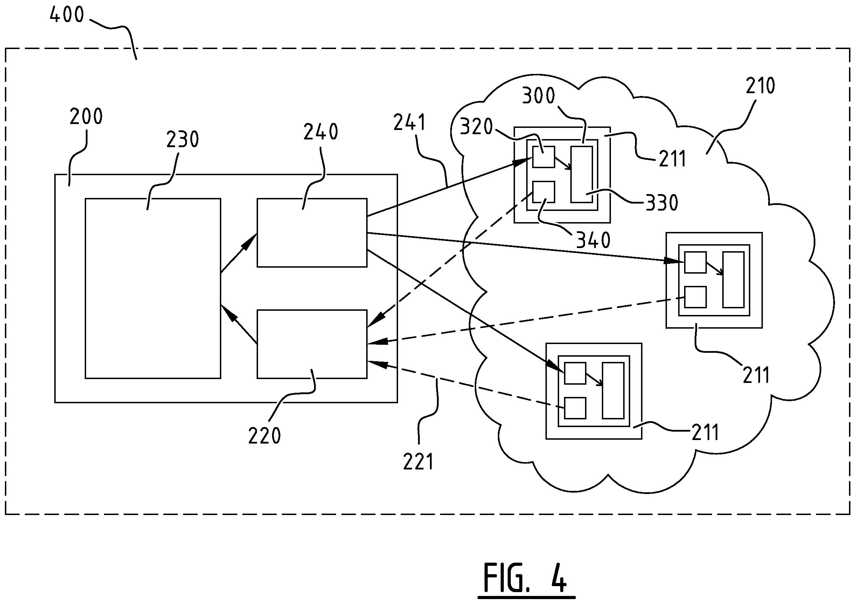

Figure 4 illustrates a system 400 for managing packet flow in a network 210 comprising a plurality of nodes 211, comprising the controller 200 according to any one of the claims 1 to 5 and wherein each node 211 of the plurality of nodes comprises a node management unit 300 according to any one of the claims 6 to 9.

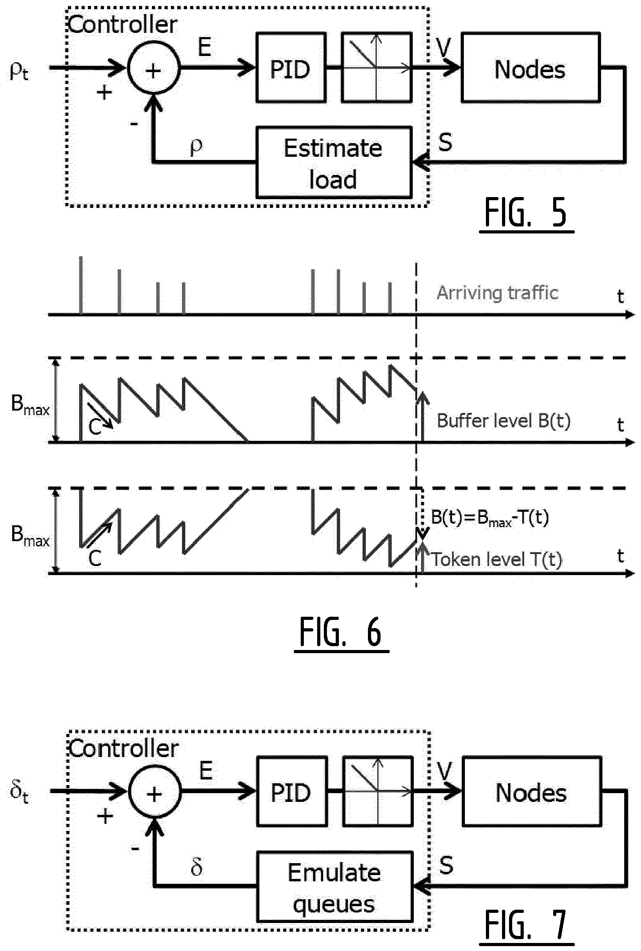

Figure 5 illustrates a controller according to an embodiment of the invention, wherein the calculating unit is configured for calculating from the amount of bytes, the load of the node during the time $\tau$, for comparing the load with a predetermined target load value, and for calculating based on the comparison, for each node of the plurality of nodes, an additional probability. This allows the controller to have an overview of the loads of the different nodes in the network at intervals $\tau$ and to take into account these loads when calculating additional probabilities. The calculation unit in figure 5 is drawn as a separate estimation unit, comparison unit, Proportional-Integral-Derivative (PID) unit and a non-linear element. In this embodiment the load p, which is represented by a (K x 1)-matrix of the bottleneck nodes is controlled to be kept around a configured target $\rho_t$, e.g. just smaller than 1. Figure 5 illustrates the control loop.
Through PID control the controller sets V to keep the load $\rho$ close to a target value $\rho_t$, e.g. just smaller than 1. The flows react to the marking or dropping probability, which depends on the additional marking or dropping probability $V_k$ (one value $V_k$ per node, grouped in a matrix V which is calculated by the controller), in a way depending on the mix of packets in the packet flow. The PID parameters are chosen so that the system is stable, as is well understood in control theory, which can be applied when the system is linearized. The non-linear element just after the PID block is needed to ensure that V is only different from 0 if E, the difference between $\rho_t$ and $\rho$, is consistently negative. Note that the loads decrease by increasing V and min{V}=0.

Figure 6 illustrates that queue occupancy, and the delay incurred in a queue, can be emulated by a token bucket. The upper graph shows arriving traffic, spaced apart by a time $\tau$, at a queue. Further, a queue of size $B_{max}$ [byte], in which information $S_i$ [byte] arrives, served with a rate of C [byte/sec], as shown in the middle graph, is equivalent to a token bucket with depth $B_{max}$ in which packets consume $S_i$ tokens and token replenishment rate C, as shown in the lower graph.
This equivalence allows the controller, as shown in figure 7 to approximately emulate the queue occupancy in the nodes. It is only an approximation as the controller only has coarse knowledge of the arriving traffic. It does not know how the packet arrivals were distributed over an interval of length $\tau$, but this is enough to follow the major trend.

As introduced above, figure 7 illustrates a controller according to an embodiment of the invention, wherein the calculating unit is configured for estimating from the amount of bytes, a delay $\delta$ encountered by packets in each node of the plurality of nodes, by approximately emulating a queue occupancy of each node of the plurality of nodes. The calculation unit is further configured for comparing the delay $\delta$ with a predetermined target delay value $\delta_t$, and for calculating based on the comparison, for each node of said plurality of nodes, an additional probability. This allows the controller to have an overview of the delays occurring at the different nodes in the network at intervals $\tau$ and to take into account these delays when calculating additional probabilities. As in figure 5, the calculation unit in figure 7 is drawn as a separate estimation unit, comparison unit, Proportional-Integral-Derivative (PID) unit and a non-linear element. But in this embodiment the estimation unit estimates the delay $\delta$ occurring in the nodes, by emulating the corresponding queues. The estimated delay $\delta$ is then compared with a target delay value $\delta_t$ and converted to an additional dropping or marking probability by means of the PID-unit and non-linear element. In all other aspects this embodiment is similar to the embodiment described above and illustrated in figure 5.

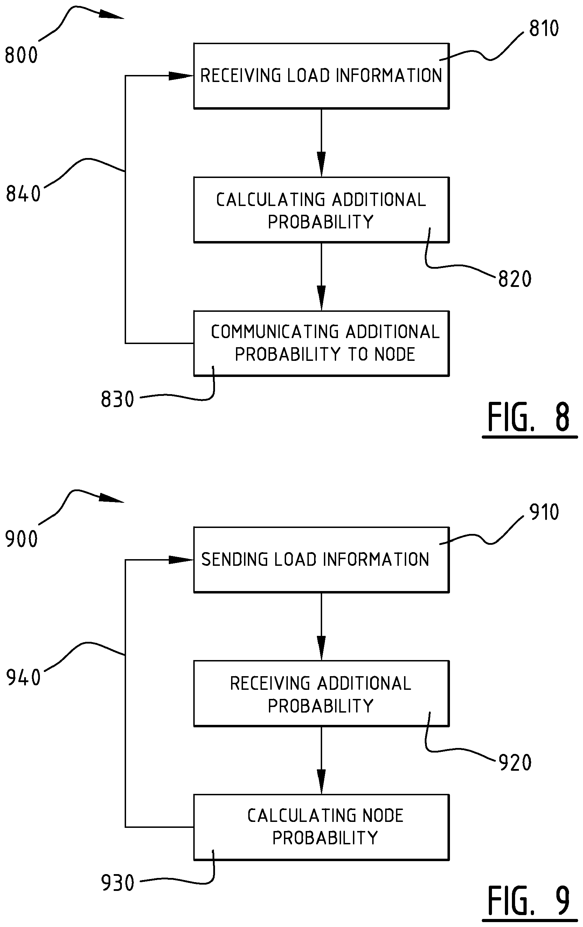

The flowchart of figure 8 illustrates an exemplary embodiment of a method 800 for controlling packet flow in a network 210 comprising a plurality of nodes 211, wherein each node 211 of the plurality of nodes is configured for managing a queue of packets in said node 211 by marking or dropping packets according to a node probability. The method 800 comprises a step 810 of receiving, at multiple moments in time, from each node 211 of the plurality of nodes load information, which is representative for a traffic load on the queue of packets in each node 211 of the plurality of nodes, and a further step 820 of calculating, based on said load information, for each node 211 of the plurality of nodes an additional probability for marking or dropping packets. The method further comprises a step 830 of communicating the additional probability to each node of the plurality of nodes, such that the node probability can be calculated. Finally, the method is repeated as illustrated by arrow 840, and steps 810, 820 and 830 are performed again at a consecutive moment in time.

The flowchart of figure 9 illustrates an exemplary embodiment of a method 900 for managing a queue of packets in a node 211 by marking or dropping packets according to a node probability, said node 211 being part of a network 210 comprising a plurality of nodes. The method 900 comprises a step 910 of sending, at multiple moments in time, load information, which is representative for a traffic load on the queue of packets in said node, to a controller 200 and a further step 920 of receiving an additional probability from the controller 200, the additional probability being based on load information from each node of the plurality of nodes. The method further comprises a step 930 of calculating the node probability based on a local node probability and the additional probability. Finally, the method is repeated as illustrated by arrow 940, and steps 910, 920 and 930 are performed again at a consecutive moment in time.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "unit" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A controller (200) for controlling packet flow in a network (210) comprising a plurality of nodes (211), wherein each node of said plurality of nodes (211) is provided with a node management unit, configured for managing a queue of packets in said node by marking or dropping packets according to a node probability, wherein the controller (200) comprises:

   - a receiving unit (220) configured for receiving, at multiple moments in time, from each node of said plurality of nodes (211), load information, which is representative for a traffic load on the queue of packets in each node of said plurality of nodes (211);
   - a calculating unit (230) configured for calculating, based on said load information, for each node of said plurality of nodes (211) an additional probability for marking or dropping packets; and
   - a communicating unit (240) configured for communicating said additional probability to each node of said plurality of nodes (211), such that the node probability can be calculated.

2. The controller (200) according to claim 1, wherein the receiving unit (220) is configured for receiving said load information from each node of the plurality of nodes (211) at regular intervals spaced apart by a time $\tau$.

3. The controller (200) according to claim 2, wherein said load information comprises, for each node of said plurality of nodes (211), an amount of bytes that has been received by said node during the time τ, and wherein the calculating unit (230) is configured for calculating the additional probability for each node of said plurality of nodes (211), based on said amount of bytes.

4. The controller (200) according to claim 3, wherein the calculating (230) unit is configured for calculating from said amount of bytes, the load of said node during said time τ, for comparing said load with a predetermined target load value, and for calculating based on said comparison, for each node of said plurality of nodes (211), the additional probability.

5. The controller (200) according to claim 3, wherein the calculating unit (230) is configured for estimating from said amount of bytes, a delay encountered by packets in each node of said plurality of nodes (211), by approximately emulating a queue occupancy of each node of said plurality of nodes (211); for comparing said delay with a predetermined target delay value; and for calculating based on said comparison, for each node of said plurality of nodes (211), the additional probability.

6. A node management unit (300), configured for managing a queue of packets in a node (211) by marking or dropping packets according to a node probability, said node (211) being part of a network (210) comprising a plurality of nodes, said node management unit (300) comprising:

   - a sending unit (340) configured for sending, at multiple moments in time, load information, which is representative for a traffic load on the queue of packets in said node, to a controller (200);
   - a receiving unit (320) configured for receiving an additional probability from the controller, said additional probability being based on load information from each node of said plurality of nodes; and
   - a calculating unit (330) configured for calculating said node probability based on a local node probability and said additional probability.

7. The node management unit (300) according to claim 6, wherein the sending unit (340) is configured for sending said load information to the controller (200) at regular intervals spaced apart by a time τ, wherein τ is larger than the interval in which the local node probability is updated by the node management unit (300).

8. The node management unit (300) according to claim 6 or 7, wherein the local node probability is managed by adaptive queue management algorithms.

9. The node management unit (300) according to any one of the claims 6 to 8, wherein the calculating unit (330) is configured for calculating the node probability $P_k$ according to following formula:

$$P_k = 1 - \exp(-(U_k + V_k))$$

wherein;

   $P_k$ is the node probability of the $k^{th}$ node;
   $U_k = -\log(1 - P_{k,loc})$ with $P_{k,loc}$ the local node probability of the $k^{th}$ node; and
   $V_k = -\log(1 P_{k,add})$ with $P_{k,add}$ the additional probability for the $k^{th}$ node.

10. A system (400) for managing packet flow in a network (210) comprising a plurality of nodes (211), comprising the controller (200) according to any one of the claims 1 to 5 and wherein each node of said plurality of nodes (211) comprises a node management unit (300) according to any one of the claims 6 to 9.

11. A method (800) for controlling packet flow in a network (210) comprising a plurality of nodes (211), wherein each node of said plurality of nodes (211) is configured for managing a queue of packets in said node by marking or dropping packets according to a node probability, said method comprising:

   - receiving (810), at multiple moments in time, from each node of said plurality of nodes (211) load information, which is representative for a traffic load on the queue of packets in each node of said plurality of nodes (211);
   - calculating (820), based on said load information, for each node of said plurality of nodes (211) an additional probability for marking or dropping packets; and
   - communicating (830) said additional probability to each node of said plurality of nodes (211), such that the node probability can be calculated.

12. The method (800) according to claim 11 wherein said load information comprises, for each node of said plurality of nodes (211), an amount of bytes that has been received by said node during a time τ, and wherein calculating (820) the additional probability for each node of said plurality of nodes (211) further comprises calculating from said amount of bytes the load of said node during said time τ, comparing said load with a predetermined target load value, and calculating based on said comparison, for each node of said plurality of nodes (211) the additional probability.

13. The method (800) according to claim 11 wherein said load information comprises, for each node of said plurality of nodes (211), an amount of bytes that has been received by said node during a time $\tau$, and wherein calculating (820) the additional probability for each node of said plurality of nodes further comprises estimating from said amount of bytes, a delay encountered by packets in each node of said plurality of nodes, by approximately emulating a queue occupancy of each node of said plurality of nodes (211); comparing said delay with a predetermined target delay value; and calculating based on said comparison, for each node of said plurality of nodes (211) the additional probability.

14. A method (900) for managing a queue of packets in a node by marking or dropping packets according to a node probability, said node being part of a network (210) comprising a plurality of nodes (211), said method comprising:

> - sending (910), at multiple moments in time, load information, which is representative for a traffic load on the queue of packets in said node, to a controller;
> - receiving (920) an additional probability from the controller, said additional probability being based on load information from each node of said plurality of nodes; and
> - calculating (930) said node probability based on a local node probability and said additional probability.

15. The method (900) according to claim 14, wherein sending (910) said load information further comprises sending said load information to the controller at regular intervals spaced apart by a time $\tau$, wherein $\tau$ is larger than the interval in which a local node probability is updated.

**Patentansprüche**

1. Steuerung (200) zum Steuern eines Paketflusses in einem Netzwerk (210), umfassend eine Vielzahl von Knoten (211), wobei jeder Knoten der besagten Vielzahl von Knoten (211) mit einer Knotenverwaltungseinheit ausgestattet ist, die zum Verwalten einer Warteschlange von Paketen in dem besagten Knoten durch Markieren oder Auswerfen von Paketen gemäß einer Knotenwahrscheinlichkeit konfiguriert ist, wobei die Steuerung (200) umfasst:

> - eine Empfangseinheit (220), die konfiguriert ist, um Lastinformationen, die für eine Verkehrslast in der Warteschlange von Paketen in jedem Knoten der besagten Vielzahl von Knoten (211) bezeichnend sind, zu mehreren Zeitpunkten im Zeitverlauf, von jedem Knoten der besagten Vielzahl von Knoten (211) zu empfangen;

> - eine Recheneinheit (230), die konfiguriert ist, um, basierend auf den besagten Lastinformationen, für jeden Knoten der besagten Vielzahl von Knoten (211) eine zusätzliche Wahrscheinlichkeit zum Markieren oder Auswerfen von Paketen zu berechnen; und
> - eine Kommunikationseinheit (240), die konfiguriert ist, um die besagte zusätzliche Wahrscheinlichkeit jedem Knoten der besagten Vielzahl von Knoten (211) mitzuteilen, so dass die Knotenwahrscheinlichkeit berechnet werden kann.

2. Steuerung (200) nach Anspruch 1, wobei die Empfangseinheit (220) konfiguriert ist, um die besagten Lastinformationen von jedem Knoten der Vielzahl von Knoten (211) in regelmäßigen Intervallen, die durch eine Zeit $\tau$ voneinander beabstandet sind, zu empfangen.

3. Steuerung (200) nach Anspruch 2, wobei die besagten Lastinformationen für jeden Knoten der besagten Vielzahl von Knoten (211) eine Menge an Bytes umfassen, die von dem besagten Knoten während der Zeit $\tau$ empfangen wurden, und wobei die Recheneinheit (230) konfiguriert ist, um die zusätzliche Wahrscheinlichkeit für jeden Knoten der besagten Vielzahl von Knoten (211), basierend auf der besagten Menge an Bytes, zu berechnen.

4. Steuerung (200) nach Anspruch 3, wobei die Recheneinheit (230) konfiguriert ist, um von der besagten Menge an Bytes die Last des besagten Knotens während der besagten Zeit $\tau$ zu berechnen, um die besagte Last mit einem vorbestimmten Ziellastwert zu vergleichen, und um basierend auf dem besagten Vergleich für jeden Knoten der besagten Vielzahl von Knoten (211) die zusätzliche Wahrscheinlichkeit zu berechnen.

5. Steuerung (200) nach Anspruch 3, wobei die Recheneinheit (230) konfiguriert ist, um von der besagten Menge an Bytes eine Verzögerung zu schätzen, der Pakete in jedem Knoten der besagten Vielzahl von Knoten (211) ausgesetzt sind, durch approximatives Emulieren einer Warteschlangenbelegung jedes Knotens der besagten Vielzahl von Knoten (211); um die besagte Verzögerung mit einem vorbestimmten Zielverzögerungswert zu vergleichen; und um basierend auf dem besagten Vergleich für jeden Knoten der besagten Vielzahl von Knoten (211) die zusätzliche Wahrscheinlichkeit zu berechnen.

6. Knotenverwaltungseinheit (300), die zum Verwalten einer Warteschlange von Paketen in einem Knoten (211) durch Markieren oder Auswerfen von Paketen gemäß einer Knotenwahrscheinlichkeit konfiguriert ist, wobei der besagte Knoten (211) Teil eines Netzwerkes (210) ist, das eine Vielzahl von Knoten umfasst, wobei die besagte Knotenverwaltungseinheit (300) umfasst:

- eine Sendeeinheit (340), die konfiguriert ist, um Lastinformationen, die für eine Verkehrslast in der Warteschlange von Paketen in dem besagten Knoten bezeichnend sind, zu mehreren Zeitpunkten im Zeitverlauf, an eine Steuerung (200) zu senden;
- eine Empfangseinheit (320), die konfiguriert ist, um eine zusätzliche Wahrscheinlichkeit von der Steuerung zu empfangen, wobei die besagte zusätzliche Wahrscheinlichkeit auf Lastinformationen von jedem Knoten der besagten Vielzahl von Knoten basiert; und
- eine Recheneinheit (330), die konfiguriert ist, um die besagte Knotenwahrscheinlichkeit basierend auf einer lokalen Knotenwahrscheinlichkeit und der besagten zusätzlichen Wahrscheinlichkeit zu berechnen.

7. Knotenverwaltungseinheit (300) nach Anspruch 6, wobei die Sendeeinheit (340) konfiguriert ist, um die besagten Lastinformationen in regelmäßigen Intervallen, die durch eine Zeit $\tau$ voneinander beabstandet sind, an die Steuerung (200) zu senden, wobei $\tau$ größer ist als das Intervall, in dem die lokale Knotenwahrscheinlichkeit von der Knotenverwaltungseinheit (300) aktualisiert wird.

8. Knotenverwaltungseinheit (300) nach Anspruch 6 oder 7, wobei die lokale Knotenwahrscheinlichkeit durch adaptive Warteschlangen-Verwaltungsalgorithmen verwaltet wird.

9. Knotenverwaltungseinheit (300) nach einem beliebigen der Ansprüche 6 bis 8, wobei die Recheneinheit (330) konfiguriert ist, um die Knotenwahrscheinlichkeit $P_k$ gemäß der folgenden Formel zu berechnen:

$$P_k = 1 - \exp(-(U_k + V_k))$$

wobei:

$P_k$ die Knotenwahrscheinlichkeit des k. Knotens ist;
$U_k = -\log(1 - P_{k,loc})$ mit $P_{k,loc}$ als lokale Knotenwahrscheinlichkeit des k. Knotens; und
$V_k = -\log(1\ P_{k,add})$ mit $P_{k,add}$ als zusätzliche Wahrscheinlichkeit für den k. Knoten.

10. System (400) zum Verwalten eines Paketflusses in einem Netzwerk (210), umfassend eine Vielzahl von Knoten (211), umfassend die Steuerung (200) nach einem beliebigen der Ansprüche 1 bis 5, und wobei jeder Knoten der besagten Vielzahl von Knoten (211) eine Knotenverwaltungseinheit (300) nach einem beliebigen der Ansprüche 6 bis 9 umfasst.

11. Verfahren (800) zum Steuern eines Paketflusses in einem Netzwerk (210), umfassend eine Vielzahl von Knoten (211), wobei jeder Knoten der besagten Vielzahl von Knoten (211) konfiguriert ist zum Verwalten einer Warteschlange von Paketen in dem besagten Knoten durch Markieren oder Auswerfen von Paketen gemäß einer Knotenwahrscheinlichkeit, wobei das besagte Verfahren umfasst:

- Empfangen (810) von Lastinformationen, die für eine Verkehrslast in der Warteschlange von Paketen in jedem Knoten der besagten Vielzahl von Knoten (211) bezeichnend sind, zu mehreren Zeitpunkten im Zeitverlauf, von jedem Knoten der besagten Vielzahl von Knoten (211);
- Berechnen (820), basierend auf den besagten Lastinformationen, für jeden Knoten der besagten Vielzahl von Knoten (211), einer zusätzlichen Wahrscheinlichkeit zum Markieren oder Auswerfen von Paketen; und
- Mitteilen (830) der besagten zusätzlichen Wahrscheinlichkeit an jeden Knoten der besagten Vielzahl von Knoten (211), so dass die Knotenwahrscheinlichkeit berechnet werden kann.

12. Verfahren (800) nach Anspruch 11, wobei die besagten Lastinformationen für jeden Knoten der besagten Vielzahl von Knoten (211) eine Menge an Bytes umfassen, die von dem besagten Knoten während einer Zeit $\tau$ empfangen wurden, und wobei das Berechnen (820) der zusätzlichen Wahrscheinlichkeit für jeden Knoten der besagten Vielzahl von Knoten (211) weiterhin das Berechnen der Last des besagten Knotens während der besagten Zeit $\tau$ aus der besagten Menge an Bytes, das Vergleichen der besagten Last mit einem vorbestimmten Ziellastwert und das Berechnen der zusätzlichen Wahrscheinlichkeit für jeden Knoten der besagten Vielzahl von Knoten (211) basierend auf dem besagten Vergleich umfasst.

13. Verfahren (800) nach Anspruch 11, wobei die besagten Lastinformationen für jeden Knoten der besagten Vielzahl von Knoten (211) eine Menge an Bytes umfassen, die von dem besagten Knoten während einer Zeit $\tau$ empfangen wurden, und wobei das Berechnen (820) der zusätzlichen Wahrscheinlichkeit für jeden Knoten der besagten Vielzahl von Knoten (211) weiterhin das Schätzen, von der besagten Menge an Bytes, einer Verzögerung, der Pakete in jedem Knoten der besagten Vielzahl von Knoten ausgesetzt sind, durch approximatives Emulieren einer Warteschlangenbelegung jedes Knotens der besagten Vielzahl von Knoten (211); das Vergleichen der besagten Verzögerung mit einem vorbestimmten Zielverzögerungswert; und das Berechnen der zusätzlichen Wahrscheinlichkeit für jeden Knoten der besagten Vielzahl von Knoten (211) basierend auf dem besagten Vergleich umfasst.

14. Verfahren (900) zum Verwalten einer Warteschlange von Paketen in einem Knoten durch Markieren oder Auswerfen von Paketen gemäß einer Knotenwahrscheinlichkeit, wobei der besagte Knoten Teil eines Netzwerkes (210) ist, das eine Vielzahl von Knoten (211) umfasst, wobei das besagte Verfahren umfasst:

- Senden (910) von Lastinformationen, die für eine Verkehrslast in der Warteschlange von Paketen in dem besagten Knoten bezeichnend sind, zu mehreren Zeitpunkten im Zeitverlauf, an eine Steuerung;
- Empfangen (920) einer zusätzlichen Wahrscheinlichkeit von der Steuerung, wobei die besagte zusätzliche Wahrscheinlichkeit auf Lastinformationen von jedem Knoten der besagten Vielzahl von Knoten basiert; und
- Berechnen (930) der besagten Knotenwahrscheinlichkeit basierend auf einer lokalen Knotenwahrscheinlichkeit und der besagten zusätzlichen Wahrscheinlichkeit.

15. Verfahren (900) nach Anspruch 14, wobei das Senden (910) der besagten Lastinformationen weiterhin das Senden der besagten Lastinformationen in regelmäßigen Intervallen, die durch eine Zeit τ voneinander beabstandet sind, an die Steuerung umfasst, wobei τ größer ist als das Intervall, in dem die lokale Knotenwahrscheinlichkeit aktualisiert wird.

**Revendications**

1. Contrôleur (200) pour contrôler un flux de paquets dans un réseau (210) comprenant une pluralité de noeuds (211), dans lequel chaque noeud parmi ladite pluralité de noeuds (211) est doté d'une unité de gestion de noeud, configuré pour gérer une file d'attente de paquets dans ledit noeud en marquant ou en abandonnant des paquets conformément à une probabilité de noeud, le contrôleur (200) comprenant :

- une unité de réception (220) configurée pour recevoir, à plusieurs instants, à partir de chaque noeud parmi ladite pluralité de noeuds (211), des informations de charge, qui sont représentatives d'une charge de trafic sur la file d'attente de paquets dans chaque noeud parmi ladite pluralité de noeuds (211) ;

- une unité de calcul (230) configurée pour calculer sur la base desdites informations de charge, pour chaque noeud parmi ladite pluralité de noeuds (211), une probabilité supplémentaire pour marquer ou abandonner des paquets ; et
- une unité de communication (240) configurée pour communiquer ladite probabilité supplémentaire à chaque noeud parmi ladite pluralité de noeuds (211), de sorte que la probabilité de noeud puisse être calculée.

2. Contrôleur (200) selon la revendication 1, dans lequel l'unité de réception (220) est configurée pour recevoir lesdites informations de charge de chaque noeud parmi la pluralité de noeuds (211) à intervalles réguliers espacés par un instant τ.

3. Contrôleur (200) selon la revendication 2, dans lequel lesdites informations de charge comprennent, pour chaque noeud parmi ladite pluralité de noeuds (211), une quantité d'octets qui a été reçue par ledit noeud durant l'instant τ, et dans lequel l'unité de calcul (230) est configurée pour calculer la probabilité supplémentaire pour chaque noeud parmi ladite pluralité de noeuds (211), sur la base de ladite quantité d'octets.

4. Contrôleur (200) selon la revendication 3, dans lequel l'unité de calcul (230) est configurée pour calculer à partir de ladite quantité d'octets, la charge dudit noeud durant ledit instant τ, pour comparer ladite charge à une charge ayant une valeur de charge cible prédéterminée, et pour calculer sur la base de ladite comparaison, pour chaque noeud parmi ladite pluralité de noeuds (211), la probabilité supplémentaire.

5. Contrôleur (200) selon la revendication 3, dans lequel l'unité de calcul (230) est configurée pour estimer à partir de ladite quantité d'octets, un retard rencontré par des paquets dans chaque noeud parmi ladite pluralité de noeuds (211), en émulant approximativement une occupation de la file d'attente de chaque noeud parmi ladite pluralité de noeuds (211); pour comparer ledit retard à une valeur de retard cible prédéterminée ; et pour calculer sur la base de ladite comparaison, pour chaque noeud parmi ladite pluralité de noeuds (211), la probabilité supplémentaire.

6. Unité de gestion de noeud (300), configurée pour gérer une file d'attente de paquets dans un noeud (211) en marquant ou en abandonnant des paquets conformément à une probabilité de noeud, ledit noeud (211) faisant partie d'un réseau (210) comprenant une pluralité de noeuds, ladite unité de gestion de noeud (300) comprenant :

- une unité d'envoi (340) configurée pour envoyer, à plusieurs instants, des informations de charge, qui sont représentatives d'une charge de trafic sur la file d'attente de paquets dans ledit noeud, à un contrôleur (200) ;
- une unité de réception (320) configurée pour recevoir une probabilité supplémentaire à partir du contrôleur, ladite probabilité supplémentaire étant basée sur des informations de charge provenant de chaque noeud parmi ladite pluralité de noeuds ; et
- une unité de calcul (330) configurée pour calculer ladite probabilité de noeud, sur la base d'une probabilité de noeud local, et ladite probabilité supplémentaire.

7. Unité de gestion de noeud (300) selon la revendication 6, dans laquelle l'unité d'envoi (340) est configurée pour envoyer lesdites informations de charge au contrôleur (200) à intervalles réguliers espacés par un instant $\tau$, $\tau$ étant supérieur à l'intervalle durant lequel la probabilité de noeud local est mise à jour par l'unité de gestion de noeud (300).

8. Unité de gestion de noeud (300) selon la revendication 6 ou 7, dans laquelle la probabilité de noeud local est gérée par des algorithmes de gestion de file d'attente adaptative.

9. Unité de gestion de noeud (300) selon l'une quelconque des revendications 6 à 8, dans laquelle l'unité de calcul (330) est configurée pour calculer la probabilité de noeud $P_k$ conformément à la formule suivante :

$$P_k = 1 - \exp(-(U_k + V_k))$$

dans laquelle ;

$P_k$ est la probabilité de noeuds du $k^{\text{ème}}$ noeud ;
$U_k = -\log(1 - P_{k,loc})$, $P_{k,loc}$ étant la probabilité de noeud local du $k^{\text{ème}}$ noeud ; et
$V_k = -\log(1\ P_{k,add})$, $P_{k,add}$ étant la probabilité supplémentaire pour le $k^{\text{ème}}$ noeud.

10. Système (400) pour gérer un flux de paquets dans un réseau (210) comprenant une pluralité de noeuds (211), comprenant le contrôleur (200) selon l'une quelconque des revendications 1 à 5 et dans lequel chaque noeud parmi ladite pluralité de noeuds (211) comprend une unité de gestion de noeud (300) selon l'une quelconque des revendications 6 à 9.

11. Procédé (800) pour contrôler un flux de paquets dans un réseau (210) comprenant une pluralité de noeuds (211), dans lequel chaque noeud parmi ladite pluralité de noeuds (211) est configuré pour gérer une file d'attente de paquets dans ledit noeud en marquant ou en abandonnant des paquets conformément à une probabilité de noeud, ledit procédé comprenant :

- la réception (810), à plusieurs instants, à partir de chaque noeud parmi ladite pluralité de noeuds (211), d'informations de charge, qui sont représentatives d'une charge de trafic sur la file d'attente de paquets dans chaque noeud parmi ladite pluralité de noeuds (211);
- le calcul (820), sur la base desdites informations de charge, pour chaque noeud parmi ladite pluralité de noeuds (211), d'une probabilité supplémentaire pour marquer ou abandonner des paquets ; et
- la communication (830) de ladite probabilité supplémentaire à chaque noeud parmi ladite pluralité de noeuds (211), de sorte que la probabilité de noeud puisse être calculée.

12. Procédé (800) selon la revendication 11 dans lequel lesdites informations de charge comprennent, pour chaque noeud parmi ladite pluralité de noeuds (211), une quantité d'octets qui a été reçue par ledit noeud durant un instant $\tau$, et dans lequel le calcul (820) de la probabilité supplémentaire pour chaque noeud parmi ladite pluralité de noeuds (211) comprend en outre le calcul à partir de ladite quantité d'octets de la charge dudit noeud durant ledit instant $\tau$, la comparaison de ladite charge avec une valeur de charge cible prédéterminée et le calcul sur la base de ladite comparaison, pour chaque noeud parmi ladite pluralité de noeuds (211), de la probabilité supplémentaire.

13. Procédé (800) selon la revendication 11 dans lequel lesdites informations de charge comprennent, pour chaque noeud parmi ladite pluralité de noeuds (211), une quantité d'octets qui a été reçue par ledit noeud durant un instant $\tau$, et dans lequel le calcul (820) de la probabilité supplémentaire pour chaque noeud parmi ladite pluralité de noeuds comprend en outre l'estimation à partir de ladite quantité d'octets, d'un retard rencontré par des paquets dans chaque noeud parmi ladite pluralité de noeuds, en émulant approximativement une occupation de file d'attente de chaque noeud parmi ladite pluralité de noeuds (211); la comparaison dudit retard avec une valeur de retard cible prédéterminée ; et le calcul sur la base de ladite comparaison, pour chaque noeud parmi ladite pluralité de noeuds (211), de la probabilité supplémentaire.

14. Procédé (900) de gestion d'une file d'attente de paquets dans un noeud en marquant ou en abandonnant des paquets conformément à une probabilité de noeud, ledit noeud faisant partie d'un réseau (210) comprenant une pluralité de noeuds (211), ledit procédé comprenant :

- l'envoi (910), à plusieurs instants, d'informations de charge, qui sont représentatives d'une charge de trafic sur la file d'attente de paquets dans ledit noeud, à un contrôleur ;
- la réception (920) d'une probabilité supplémentaire à partir du contrôleur, ladite probabilité supplémentaire étant basée sur des informations de charge provenant de chaque noeud parmi ladite pluralité de noeuds ; et
- le calcul (930) de ladite probabilité de noeud sur la base d'une probabilité de noeud local et de ladite probabilité supplémentaire.

15. Procédé (900) selon la revendication 14, dans lequel l'envoi (910) desdites informations de charge comprend en outre l'envoi desdites informations de charge au contrôleur à intervalles réguliers espacés par un instant $\tau$, $\tau$ étant supérieur à l'intervalle durant lequel une probabilité de noeud local est mise à jour.

FIG. 1A

FIG. 1B

FIG. 1C

FIG. 1D

FIG. 2

EP 2 991 290 B1

FIG. 3

EP 2 991 290 B1

EP 2 991 290 B1

FIG. 4

FIG. 5

FIG. 6

FIG. 7

800

810

840

```
┌─────────────────────────────┐
│  RECEIVING LOAD INFORMATION │
└─────────────────────────────┘
              │
              ▼
┌─────────────────────────────┐
│   CALCULATING ADDITIONAL    │
│       PROBABILITY           │
└─────────────────────────────┘
              │
              ▼
┌─────────────────────────────┐
│  COMMUNICATING ADDITIONAL   │
│    PROBABILITY TO NODE      │
└─────────────────────────────┘
```

820

830

<u>FIG. 8</u>

900

910

940

```
┌─────────────────────────────┐
│   SENDING LOAD INFORMATION  │
└─────────────────────────────┘
              │
              ▼
┌─────────────────────────────┐
│    RECEIVING ADDITIONAL     │
│       PROBABILITY           │
└─────────────────────────────┘
              │
              ▼
┌─────────────────────────────┐
│     CALCULATING NODE        │
│       PROBABILITY           │
└─────────────────────────────┘
```

920

930

<u>FIG. 9</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009180380 A1

### Non-patent literature cited in the description

- TLA: A Traffic Load Adaptive Congestion Control Algorithm for TCP/AQM Networks. **MING JIANG et al.** Intelligent Systems Design and Applications, 2006. ISDA'06 Sixth International Conference On. IEEE, 01 October 2006

- Byte and Packet Congestion Notification; rfc7141.txt. **BRISCOE J MANNER AALTO UNIVERSITY B.** Byte and Packet Congestion Notification; RFC7141.txt. Internet Engineering Task Force, IETF; Standard, Internet Society (ISOC)